# EUROPÄISCHE PATENTSCHRIFT

(11) **EP 3 108 572 B1**
(45) Veröffentlichungstag und Bekanntmachung des Hinweises auf die Patenterteilung: **20.12.2017**
(21) Anmeldenummer: 15719169.3
(22) Anmeldetag: 20.04.2015
(51) Int. Cl.: C09D 5/24, H02K 15/00, H02K 3/40, H02K 15/10, C09D 5/26, H01B 1/12

(54) **GLIMMSCHUTZSYSTEM FÜR EINE HOCHSPANNUNGSMASCHINE, REPARATURLACK UND HERSTELLUNGSVERFAHREN**
CORONA PROTECTION SYSTEM FOR A HIGH VOLTAGE ELECTRIC MACHINE, REPAIR VARNISH AND PRODUCING METHOD
SYSTÈME DE PROTECTION CORONA POUR UNE MACHINE ÉLECTRIQUE À HAUTE TENSION, VERNIS DE RÉPARATION ET PROCÉDÉ DE PRODUCTION

(30) Priorität: 12.05.2014 DE 102014208857
(43) Veröffentlichungstag der Anmeldung: 28.12.2016
(73) Patentinhaber: Siemens Aktiengesellschaft, 80333 München (DE)
(72) Erfinder: MASHKIN, Andrey, 50672 Köln (DE); LITINSKY, Alexander, 40223 Düsseldorf (DE); POHLMANN, Friedhelm, 45355 Essen (DE); SCHMIDT, Guido, 42799 Leichlingen (DE); STAUBACH, Christian, 45768 Marl (DE)
(86) Internationale Anmeldenummer: PCT/EP2015/058511
(87) Internationale Veröffentlichungsnummer: WO 2015/172976

(56) Entgegenhaltungen:
- EP-A1- 2 521 247
- WO-A1-97/43818
- DE-U1-202004 015 355
- US-A1- 2013 300 248

## Beschreibung

Die Erfindung liegt auf dem Gebiet von Glimmschutzsystemen für eine Hochspannungsmaschine mit einem Umhüllkörper für einen stromführenden Leiter der Hochspannungsmaschine, wobei der Umhüllkörper einen elektrisch leitfähigen Lack aufweist, wobei dem leitfähigen Lack ein Füllstoff zugesetzt ist. Weiterhin betrifft die Erfindung einen Reparaturlack und ein Herstellungsverfahren hierzu. Derartige Glimmschutzsysteme, Reparaturlacke und Verfahren sind insbesondere für drehende elektrische Maschinen, zum Beispiel Generatoren und/oder Motoren interessant.

In Turbogeneratoren werden in der Einzelstab- oder Ganztränktechnik die Generatorwicklungsstäbe mit einer inneren Leitschicht (innere Potentialsteuerung - IPS) und einer äußeren Leitschicht (Außenglimmschutz - AGS) gegen Hohlräume und Ablösungen abgeschirmt. Ein Turbogenerator ist derzeit meist als dreisträngige Drehstrom-Synchronmaschine mit einem massiven zwei- oder vierpoligen Läufer realisiert. Der Leistungsbereich eines solchen Turbogenerators reicht typischerweise von ca. 20 MVA bis ca. 2000 MVA.

Der Stator eines üblichen Synchrongenerators umfasst eine Vielzahl von sogenannten Statorwicklungen, in welchen durch induktive Wechselwirkung mit dem rotierenden, mit einem konstanten Strom beaufschlagten Rotor eine Wechselspannung induziert wird. Die Statorwicklungen sind in einem sogenannten Blechpaket aufgenommen. Dieses dient unter anderem zur Führung und Verstärkung des magnetischen Feldes. Zur Verringerung von Verlusten durch Wirbelströme ist das gesamte Blechpaket aus dünnen, gegeneinander isolierten Blechen aufgebaut. Die Statorwicklungen bestehen aus einer Vielzahl von Stäben, deren jeweilige Mittelstücke (die sogenannten "Aktivteile") in Nuten des Blechpakets eingelegt sind. Die einzelnen Stäbe treten am sogenannten "Wickelkopf" evolventenförmig aus den Nuten aus. Dort sind die einzelnen Stäbe zur Statorwicklung verschaltet (d.h. miteinander kontaktiert).

Die im Blechpaket einliegenden Stäbe bzw. Stabbereiche liegen auf hohem elektrischem Potential und sind daher untereinander, sowie gegen das geerdete Blechpaket durch eine Hauptisolierschicht isoliert.

Um bei Betriebsspannungen von einigen kV Teilentladungen zu vermeiden, ist die Hauptisolierschicht üblicherweise mit einer inneren und einer äußeren Leitschicht gegen Hohlräume und Ablösungen abgeschirmt (innere Potentialsteuerung - IPS, bzw. Außenglimmschutz - AGS). Die elektrische Feldstärke wird in der Hauptisolierschicht ausgehend von der IPS in radialer Richtung bis zum AGS abgebaut. Somit wird sichergestellt, dass das elektrische Feld nur im Inneren der Hauptisolierung verbleibt und keine Teilentladungen zwischen der Hauptisolierung und einem geerdeten Blechpaket entstehen. Zur axialen Steuerung des elektrischen Feldes am Ende des Außenglimmschutzes wird zudem schwach leitfähiger Endenglimmschutz appliziert und mit dem Außenglimmschutz elektrisch verbunden.

Der Außenglimmschutz von rotierenden elektrischen Maschinen ist einer natürlichen Alterung ausgesetzt, die je nach Hersteller und Bautyp des Generators durch thermomechanische Spannungen, Vibration oder Teilentladungsaktivität hervorgerufen wird. Als Ergebnis wird ein Teil des Außenglimmschutzes erodiert. Eine besondere Form hierbei ist die elektrisch bedingte Erosion. Die Erosionsstellen betreffen prinzipiell die gesamte Länge des Außenglimmschutzes, wobei je nach Hersteller und Bautyp des Generators entweder der Außenglimmschutz innerhalb des Blechpakets oder der Außenglimmschutz außerhalb des Blechpakets verstärkt betroffen wird. Durch die fortschreitende Erosion wird in axialer Richtung die elektrische Anbindung des Endenglimmschutzes zum Blechpaket gestört. In radialer Richtung entstehen einerseits Teilentladungen, andererseits werden die Stäbe gelockert und dadurch im Extremfall einer starken Vibration ausgesetzt.

Es wird daher eine leitfähige Substanz benötigt, die die entstandenen (Anwendung als Reparaturlack) oder entstehenden (Anwendung bei Generatorherstellung) Spalten überbrücken kann und eine leitfähige Benetzung der freigelegten Oberfläche der Hauptisolierung sichert. Nachteilig ist jedoch, dass die meisten polymerbasierten Lacken und Farben bei der Trocknung oder Aushärtung schrumpfen und so insbesondere eine lückenfreie Überbrückung von Spalten erschwert werden. Durch thermomechanische Lastspiele ist zudem ein erneuertes Auftreten der Spalten im Betrieb nicht auszuschließen. Die EP 2 521 247 A1 offenbart einen Glimmschutz für eine Hochspannungsmaschine, wobei ein stromführender Leiter mit einem Umhüllkörper versehen wird, der ein Basisharz sowie eine nanoskalige Füllstoffkomponente umfasst.

Die erste Aufgabe der Erfindung ist ein, hinsichtlich Erosionen, verbessertes Glimmschutzsystem zu schaffen. Eine zweite Aufgabe ist die Angabe eines Reparaturlacks zur Durchführung der Reparatur an einem erodierten Glimmschutzsystem. Eine dritte Aufgabe ist die Angabe eines Verfahrens zur Durchführung der Reparatur eines erodierten Glimmschutzsystems.

Die erste Aufgabe wird gelöst durch die Angabe eines Glimmschutzsystems für eine Hochspannungsmaschine umfassend einem Umhüllkörper für einen stromführenden Leiter der Hochspannungsmaschine, wobei der Umhüllkörper einen elektrisch leitfähigen Lack aufweist, wobei dem leitfähigen Lack ein Füllstoff zugesetzt ist, und wobei der Füllstoff zumindest teilweise einen thermoexpandierenden Füllstoff umfasst.

Die zweite Aufgabe wird gelöst durch die Angabe eines Reparaturlacks zur Reparatur eines Umhüllkörpers für eine Hochspannungsmaschine, umfassend einen elektrisch leitfähigen Lack, wobei dem leitfähigen Lack ein Füllstoff zugesetzt ist, und wobei der Füllstoff zumindest teilweise einen thermoexpandierenden Füllstoff umfasst.

Der Reparaturlack kann bevorzugt für die Reparatur eines wie oben beschriebenen erodierten Umhüllkörpers angewendet/verwendet werden.

Durch eine Zugabe von thermoexpandierbarem Füllstoff in den leitfähigen Lack (im Weiteren auch parallel als Matrix bezeichnet) kann ein thermoexpandierbarer Lack bzw. Reparaturlack entstehen. Ein solcher Reparaturlack wird in einem flüssigen Zustand die Erosionstellen, d.h. die Spalten sowie Stellen mit einem erodiertem AGS soweit möglich ausfüllen, wird dann unter Umwelteinflüssen (vor)gelieren bzw. vortrocknen (z.B. bei einer raumtemperaturvernetzenden Matrix) und wird im Anschluss durch eine Einwirkung von Wärme expandieren. Die Vorgelierung im Inneren des Reparaturlacks verhindert eine übermäßige Expansion, so dass der Füllstoff nur soweit expandieren kann, wie die intermolekularen Bindungen in dem Lack dies zulassen.

Somit können die Spalten an erodierten Glimmschutzbereichen besser und sicherer ausgefüllt werden, verglichen mit dem ungefüllten, schrumpfenden Leitlack des Stands der Technik. Mit der Temperatureinwirkung wird neben der Expansion des Füllstoffs auch eine Endvernetzung des Lacks hervorgerufen, so dass sich der Lack bzw. der Reparaturlack ausreichend verfestigt. Je nach Matrixmaterial kann jedoch gezielt eine Restelastizität erreicht werden, die zum Ausgleichen etwaiger thermomechanischer Lastspiele erforderlich ist.

In den Unteransprüchen sind weitere vorteilhafte Maßnahmen aufgelistet, die beliebig miteinander kombiniert werden können, um weitere Vorteile zu erzielen.

Bevorzugt ist der Füllstoff elektrisch leitfähig. Dabei kann die elektrische Leitfähigkeit von Natur aus gegeben sein oder durch eine Beschichtung oder Oberflächenbehandlung hergestellt werden.

Bevorzugt besteht der Füllstoff vollständig aus thermoexpandierendem Füllstoff.

In besonderer Ausgestaltung umfasst der thermoexpandierende Füllstoff zumindest teilweise mikroskopische Hohlkugeln, deren Hülle aus Polymeren besteht. Bevorzugt sind auf der Hülle verschiedene anorganische Beschichtungen an- oder aufgebracht, die die mechanische Festigkeit, Erosionsbeständigkeit, thermische oder elektrische Leitfähigkeit positiv beeinflussen. In besonderer Ausgestaltung enthalten die Hohlkugeln Gas und/oder aufkochende Flüssigkeit, wobei beim Einwirken von Wärme die Hülle der Hohlkugeln erweicht, und das in den Hohlkugeln enthaltene Gas oder die aufkochende Flüssigkeit eine Expansion bewirkt. Der resultierende thermoexpandierbare Lack nimmt daher bei der Wärmeeinwirkung ein höheres Volumen ein bzw. kann das verfügbare Volumen ausfüllen.

Für den Einsatz als Leitlack wirkt positiv die Tatsache, dass die Oberfläche solcher Hohlkugel durch den Lack benetzt wird, was durch die Lackviskosität hervorgerufen wird, und somit die Hohlräume im Inneren der Hohlkugel elektrisch abgeschirmt werden. Somit können auch Hohlkugeln zum Einsatz kommen, die keine leitfähige Beschichtung haben.

Der Temperaturbereich der Expansion der Hohlkugeln liegt für polymere Kugelschalenmaterialien im Bereich von 60-220°C. Durch die geeignete Wahl des Kugelschalenmaterials und des Füllstoffs kann der Grad der möglichen Expansion der Kugel bei einer vorgegebenen Temperatur sowie die Reversibilität oder Einmaligkeit der Expansion eingestellt werden.

Typische Abmessungen:
Kugeldurchmesser unexpandiert 10-40 µm,
Kugeldurchmesser expandiert: bis 200 µm,
Wandstärke: von einigen zehn µm (unexpandiert) bis einigen µm oder geringer (expandiert).

Dabei sind die Materialeigenschaften von thermoexpandierbarem Material im Wesentlichen der Füllgrad an Hohlkugeln, deren Größe und die Eigenschaften des Lacks, der die Mikrohohlkugeln enthält und umschließt, entscheidend. Auch kann die Expansion der Kugeln durch den Lack oder die Temperatur begrenzt werden. Somit wird die Expansion des Gesamtmaterials begrenzt.

Zur Steigerung der Erosionsbeständigkeit des Reparaturlacks können dem Lack bzw. der Matrix auch nanoskalige oder mikroskalige anorganische erosionshemmende Partikeln zugesetzt werden. Dadurch wird die Erosionsgeschwindigkeit bei Eintreten von Teilentladungen signifikant reduziert.

In bevorzugter Ausgestaltung ist der Lack elastisch oder semi-elastisch. Dadurch ist auch ein Lack zur Anwendung bei der Generatorfertigung oder Reparatur denkbar, der bei der Betriebswärme oder durch einen speziellen Heizvorgang/ Generatorwärmelauf im Erosionsfall expandieren kann. Wird ein Teil des Lacks erodiert, kann das erodierte Volumen durch die Expansion der verbleibenden Bereiche zumindest teilweise ausgefüllt werden. Somit wird die Erosionsgeschwindigkeit reduziert.

Bevorzugt liegt die Expansionstemperatur des thermoexpandierenden Füllstoffes über der Angelier- und/oder Aushärtetemperatur des Lacks. Wenn die Expansionstemperatur des Füllstoffes über der Angelier- und/oder Aushärtetemperatur des Lacks bzw. der Matrix liegt, kann auch ein heiß härtendes Lacksystem eingesetzt werden. Somit sind kurze Reparaturzeiten möglich.

Bevorzugt ist der Lack mit dem thermoexpandierenden Füllstoff bereits vorgeliert. Die Vorgelierung im Inneren des Lacks verhindert eine übermäßige Expansion, so dass die Füllstoffpartikelchen nur soweit expandieren können, wie die intermolekularen Bindungen in dem Lack dies zulassen. Somit können die Spalten an erodierten Bereichen besser und sicherer ausgefüllt werden, verglichen mit dem ungefüllten, schrumpfenden Leitlack des Stands der Technik.

In bevorzugter Ausgestaltung weist der Lack mit dem thermoexpandierenden Füllstoff unterschiedliche Vernetzungsgrade bei der Applikation auf. Durch unterschiedliche Vernetzungsgrade in der Lackschicht kann eine Expansion in die sonst sehr schwer zugänglichen Spalten in Axialrichtung erfolgen. Dabei kann das Lackmaterial insbesondere einerseits im Wesentlichen aus Monomeren bestehen, welche sich in der Aushärtungsreaktion zu dem Feststoff verketten und/oder vernetzen. Alternativ kann das Matrixmaterial auch bereits aus teilweise vorvernetzten (B-Stage) Polymeren bestehen, welche sich dann wiederum in der Aushärtungsreaktion zu dem Feststoff vernetzen. Eine solche Aushärtungsreaktion kann dabei insbesondere durch eine Polymerisation, eine Polyaddition oder eine Polykondensation erfolgen. Durch unterschiedliche Vernetzungsgrade in dem Lack erfolgt nun eine Expansion in die sonst sehr schwer zugänglichen Spalten in Axialrichtung.

Bevorzugtermaßen ist das Glimmschutzsystem ein Außenglimmschutz. Alternativ ist das Glimmschutzsystem bevorzugtermaßen ein Endenglimmschutz.

Die dritte Aufgabe wird gelöst durch die Angabe eines Verfahrens zur Herstellung eines Glimmschutzsystems umfassend einen leitfähigen Umhüllkörper für einen stromführenden Leiter einer Hochspannungsmaschine, wobei der Umhüllkörper zumindest teilweise erodiert ist, mit den folgenden Schritten:
- Bereitstellen eines leitfähigen Lacks, wobei dem leitfähigen Lack ein thermoexpandierender Füllstoff zugesetzt wird,
- Auftragen des leitfähigen Lacks mit dem zugesetzten thermoexpandierenden Füllstoff, zumindest auf die Erosionsstelle,
- Hineinfließen des leitfähigen Lacks mit dem zugesetzten thermoexpandierenden Füllstoff zumindest teilweise in die Erosionsstelle,
- Vortrocken und/oder Vorgelieren des leitfähigen Lacks mit dem zugesetzten thermoexpandierenden Füllstoff,
- Expansion des leitfähigen Lacks mit dem zugesetzten thermoexpandierenden Füllstoff, wobei durch die Expansion die Erosionsstelle im Wesentlichen vollständig ausgefüllt wird.

Bevorzugt kann die Expansion durch Heizen mit Heißluft und/oder im Betrieb durch Betriebswärme z.B. des Generators erfolgen. Wenn außerdem die Expansionstemperatur des Füllstoffes über der Angelier- und/oder Aushärtetemperatur des Lacks liegt, kann auch ein heiß härtender Lack eingesetzt werden. Somit sind kurze Reparaturzeiten möglich.

Bevorzugt umfasst der thermoexpandierende Füllstoff zumindest teilweise mikroskopische Hohlkugeln, deren Hülle aus Polymeren besteht, wobei die Expansion der Hohlkugeln durch den Lack oder die Temperatur begrenzt wird. Beim Einwirken der Wärme erweicht die Hülle der Hohlkugeln und das in den Hohlkugeln enthaltene Gas und/oder die aufkochende Flüssigkeit führen zu einer Expansion. Der resultierende thermoexpandierbare Reparaturlack nimmt daher bei der Wärmeeinwirkung ein höheres Volumen ein bzw. kann das verfügbare Volumen ausfüllen.

Bevorzugt werden durch eine Festlegung des Kugelschalenmaterials und des Füllstoffs der Grad der möglichen Expansion der Kugel bei einer vorgegebenen Temperatur sowie die Reversibilität oder Einmaligkeit der Expansion eingestellt. Für die Materialeigenschaften von thermoexpandierbarem Material sind im Wesentlichen der Füllgrad an Hohlkugeln, deren Größe und die Eigenschaften des Lacks, welcher die Mikrohohlkugeln enthält und umschließt, entscheidend. Auch kann die Expansion der Kugeln durch den Lack oder die Temperatur begrenzt werden. Somit wird die Expansion des Gesamtmaterials begrenzt.

Durch die Erfindung ist eine schnellere, zuverlässigere und nachhaltigere Reparatur des Glimmschutzes mit dem Reparaturlack möglich. Zudem ist ein verbessertes Glimmschutzsystem gegeben. Wird ein Teil des erfindungsgemäßen Lacks erodiert, kann nämlich das erodierte Volumen durch die Expansion der verbleibenden Bereiche zumindest teilweise ausgefüllt werden. Somit wird die Erosionsgeschwindigkeit reduziert. Eine Neuwicklung kann prinzipiell vermieden werden.

Weitere Merkmale, Eigenschaften und Vorteile der vorliegenden Erfindung ergeben sich aus der nachfolgenden Beschreibung unter Bezugnahme auf die beiliegende Figuren. Darin zeigen schematisch:
- FIG 1: einen Längsschnitt eines Turbogeneratorständers mit dem erfindungsgemäßen Glimmschutzsystem,
- FIG 2: einen erfindungsgemäßen Reparaturlack,
- FIG 3: das Verfahren anhand der Reparatur einer schwer zugänglichen Stelle.

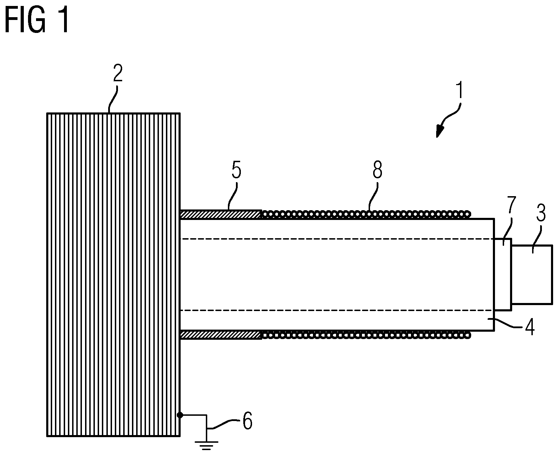

Wie aus der Figur ersichtlich ist, weist ein Turbogeneratorständer 1 ein Ständerblechpaket 2 auf, aus dem ein Generatorwicklungsstab 3 vorsteht. Der Generatorwicklungsstab 3 ist mit einer Hauptisolation 4 umgeben, wobei der Wicklungsstab 3 mit seiner Hauptisolation 4 und mit seinem einen Ende auch außerhalb des Ständerblechpakets 2 angeordnet ist. Im Bereich der Austrittsstelle des Wicklungsstabs 3 aus dem Ständerblechpaket 2 ist ein Außenglimmschutz 5 dargestellt, der die Hauptisolation 4 ummantelt und über das Blechpaket mit einer Erdung 6 geerdet ist. Außerdem ist zwischen dem Generatorwicklungsstab 3 und der Hauptisolation 4 eine innere Potentialsteuerung 7 vorgesehen. Ausgehend von dem dem Ständerblechpaket 2 abgewandten Ende des Außenglimmschutzes 5, umhüllt der Endenglimmschutz 8 die Hauptisolation 4 auf einer Teillänge. Das Glimmschutzsystem kann den Außenglimmschutz 5 und den Endenglimmschutz 8 aufweisen, wobei der Endenglimmschutz an seinem dem Blechpaket zugewandten Ende an den Außenglimmschutz elektrisch angebunden ist. Die Elemente 3, 4, 5, 7 gehen durch die nicht abgebildete Nut des Blechpaketes durch und weisen auf dem anderen Ende des Blechpaketes ebenfalls die der Fig. 1 entsprechende Anordnung mit einem Endenglimmschutz 8 auf.

Die möglichen Erosionsstellen betreffen prinzipiell die gesamte Länge des Außenglimmschutzs, wobei je nach Hersteller und Bautyp des Generators entweder der Außenglimmschutz innerhalb des Blechpakets oder der Außenglimmschutz außerhalb des Blechpakets verstärkt betroffen wird. Durch die fortschreitende Erosion wird in axialer Richtung die elektrische Anbindung von Endenglimmschutz zum Blechpaket gestört. In radialer Richtung entstehen einerseits Teilentladungen und andererseits werden die Stäbe gelockert und dadurch im Extremfall einer starken Vibration ausgesetzt. Selbstverständlich kann die Erosion auch oder zusätzlich den Endenglimmschutz 8 betreffen.

Zur Reparatur und/oder Herstellung wird daher eine leitfähige Substanz benötigt, die die entstandenen oder entstehende Spalten überbrücken kann und eine leitfähige Benetzung der freigelegten Oberfläche der Hauptisolierung sichern wird.

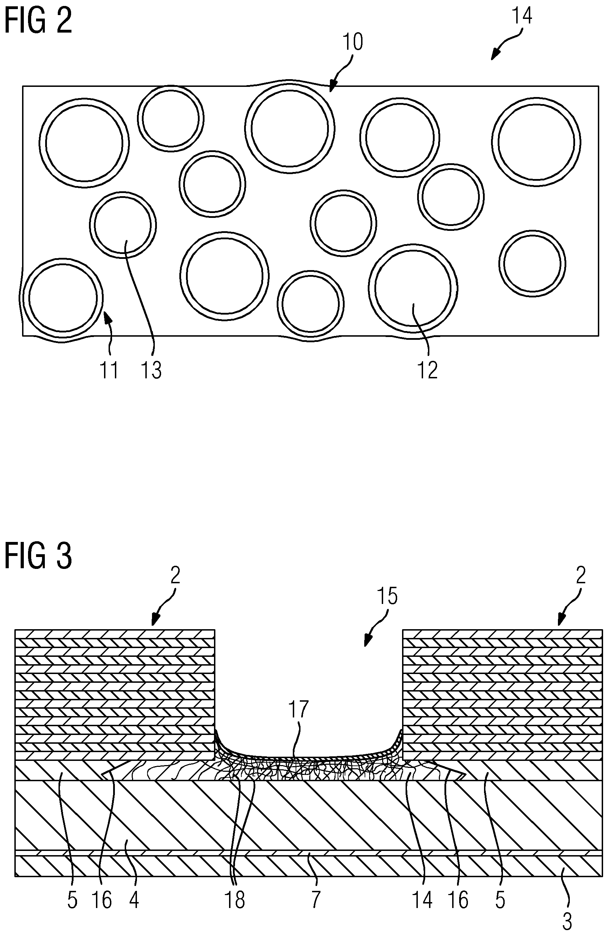

Durch eine Zugabe von thermoexpandierbarem Füllstoff in den leitfähigen Lack 10 (im Weiteren auch parallel als Matrix bezeichnet) (FIG 2) kann ein thermoexpandierbarer Reparaturlack 14 (FIG 2) entstehen.

FIG 2 zeigt einen solchen Reparaturlack 14. Ein solcher Reparaturlack 14 (FIG 2) wird in einem flüssigen Zustand die Spalten soweit möglich ausfüllen, wird dann unter Umwelteinflüssen gelieren bzw. vortrocknen (z.B. bei einer raumtemperaturvernetzenden Matrix) und wird im Anschluss durch Einwirkung der Wärme expandieren.

Die Vorgelierung/Vortrocknung im Inneren des Reparaturlacks 14 verhindert eine übermäßige Expansion, so dass der Füllstoff nur soweit expandieren kann, wie die intermolekularen Bindungen in dem Lack 10 dies zulassen.

Somit können insbesondere die Spalten an erodierten Glimmschutzbereichen besser und sicherer ausgefüllt werden, verglichen mit dem ungefüllten, schrumpfenden Lack des Stands der Technik. Als thermoexpandierbarer Füllstoff können mikroskopischen Hohlkugeln 13 eingesetzt werden, deren Hülle 11 aus Polymeren besteht. Auf die Hülle 11 können verschiedene organische wie anorganische Beschichtungen an- oder aufgebracht werden, die die mechanische Festigkeit, Erosionsbeständigkeit und thermische oder elektrische Leitfähigkeit positiv beeinflussen. Beim Einwirken der Wärme erweicht die Hülle 11 der Hohlkugeln 13 und das in den Hohlkugeln 13 enthaltene Gas 12 und/oder die aufkochende Flüssigkeit 12 führt zu einer Expansion. Der resultierende thermoexpandierbare Reparaturlack 14 nimmt daher bei der Wärmeeinwirkung ein höheres Volumen ein bzw. kann das verfügbare Volumen ausfüllen.

Für den Einsatz als Leitlack wirkt positiv die Tatsache, dass die Oberfläche solcher Hohlkugeln 13 durch den Lack 10 benetzt wird, was durch Lackviskosität hervorgerufen wird, und somit die Hohlräume im Inneren der Hohlkugel elektrisch abgeschirmt werden. Somit können auch Hohlkugeln 13 zum Einsatz kommen, die keine leitfähige Beschichtung haben.

Der Temperaturbereich der Expansion der Hohlkugeln 13 liegt für polymere Kugelschalenmaterialien im Bereich von 60-220°C. Durch die geeignete Wahl des Kugelschalenmaterials und des Füllstoffs, kann der Grad der möglichen Expansion der Hohlkugeln 13 bei einer vorgegebenen Temperatur sowie die Reversibilität oder Einmaligkeit der Expansion eingestellt werden. Dabei sind mögliche Kugeldurchmesser: unexpandiert 10-40 µm, expandiert: bis 200 µm. Die Wandstärke kann dabei von einigen zehn µm (unexpandiert) bis einigen µm oder geringer (expandiert) reichen.

Für die Materialeigenschaften von thermoexpandierbarem Material sind im Wesentlichen der Füllgrad an Hohlkugeln 13, deren Größe und die Eigenschaften des Lacks 10, der die Mikrohohlkugeln 13 enthält und umschließt, entscheidend. Auch kann die Expansion der Hohlkugeln 13 durch den Lack 10 oder die Temperatur begrenzt werden. Somit wird die Expansion des Gesamtmaterials begrenzt.

Die Expansion kann bei der Reparatur durch Heizen mit Heißluft oder im Betrieb durch Betriebswärme z.B. des Generators erfolgen oder durch eine noch höhere Temperatureinwirkung im Rahmen eines gesonderten Generatorwärmelaufs. Außerdem wenn die Expansionstemperatur des Füllstoffes über der Angelier- und/oder Aushärtetemperatur des Lacks 10 liegt, kann auch ein heiß härtendes Lacksystem 10 eingesetzt werden. Somit sind kurze Reparaturzeiten möglich.

Eine weitere Möglichkeit bietet die Wahl eines elastischen bzw. semi-elastischen Lacks 10 bzw. Matrix. Dadurch ist auch ein Reparaturlack oder ein Lack zur Anwendung bei der Generatorfertigung 14 denkbar, der bei der Betriebswärme oder durch einen speziellen Heizvorgang/Generatorwärmelauf im Erosionsfall expandieren kann. Wird ein Teil des Lacks 14 erodiert, kann das erodierte Volumen durch die Expansion der verbleibenden Bereiche zumindest teilweise ausgefüllt werden. Somit wird die Erosionsgeschwindigkeit reduziert.

Zur Steigerung der Erosionsbeständigkeit des Reparaturlacks 14, können dem Lack 10 auch nanoskalige oder mikroskalige anorganische erosionshemmende Partikel (nicht gezeigt) zugesetzt werden. Dadurch wird die Erosionsgeschwindigkeit bei Eintreten der Teilentladungen signifikant reduziert.

Durch unterschiedliche Vernetzungsgrade in dem Reparaturlack 14, kann zudem eine Expansion in die sonst sehr schwer zugängliche Spalten in Axialrichtung erfolgen. Dies wird anhand FIG 3 beschrieben:
FIG 3 zeigt die Reparatur einer schwer zugänglichen Erosionsstelle 16 im Kühlkanal 15 des Blechpakets. Durch die vernetzte Lackhaut 17 und die verschieden vernetzten Innenbereiche 18 im Inneren des Reparaturlacks 14 entsteht an der Oberfläche eine Barriere, die die Expansion des Lacks in radialer Richtung (in der Figur 3 nach oben hin) sperren und in der axialen Richtung (in der Figur 3 nach rechts und links) begünstigen kann. Die Unterschiede in der Teilvernetzung des Reparaturlacks 14 kommen durch den verschiedenen Grad der Exponierung, welche z.B. durch die Schichtdicke bewirkt wird, gegenüber Aushärtekatalysatoren, wie z.B. Luft, Wärme, UV-Licht, etc. zustande.

Mit der Temperatureinwirkung wird neben der Expansion der Füllpartikel auch eine Endvernetzung des Reparaturlacks 14 hervorgerufen, so dass der Reparaturlack 14 ausreichend verfestigt. Je nach Lackmaterial kann jedoch gezielt eine Restelastizität erreicht werden, die zum Ausgleichen etwaiger thermomechanischer Lastspiele erforderlich ist.

Durch die Erfindung ist eine schnellere, zuverlässigere und nachhaltigere Reparatur des Glimmschutzes mit dem Reparaturlack möglich. Zudem ist ein verbessertes Glimmschutzsystem gegeben. Wird ein Teil des erfindungsgemäßen Lacks erodiert, kann nämlich das erodierte Volumen durch die Expansion der verbleibenden Bereiche zumindest teilweise ausgefüllt werden. Somit wird die Erosionsgeschwindigkeit reduziert. Eine Neuwicklung kann prinzipiell vermieden werden.

## Patentansprüche

1. Glimmschutzsystem für eine Hochspannungsmaschine umfassend einen Umhüllkörper für einen stromführenden Leiter der Hochspannungsmaschine, wobei der Umhüllkörper einen elektrisch leitfähigen Lack (10) aufweist, wobei dem leitfähigen Lack (10) ein Füllstoff zugesetzt ist,
**dadurch gekennzeichnet, dass** der Füllstoff zumindest teilweise einen thermoexpandierenden Füllstoff umfasst.

2. Glimmschutzsystem für eine Hochspannungsmaschine nach Anspruch 1,
**dadurch gekennzeichnet, dass** der Füllstoff elektrisch leitfähig ist.

3. Glimmschutzsystem nach Anspruch 1 oder 2,
**dadurch gekennzeichnet, dass** der Füllstoff vollständig aus thermoexpandierendem Füllstoff besteht.

4. Glimmschutzsystem nach einem der vorhergehenden Ansprüche,
**dadurch gekennzeichnet, dass** der thermoexpandierende Füllstoff zumindest teilweise mikroskopische Hohlkugeln (13) umfasst, deren Hülle (11) aus Polymeren besteht.

5. Glimmschutzsystem nach Anspruch 4,
**dadurch gekennzeichnet, dass** auf die Hülle (11) verschiedene anorganische Beschichtungen an- oder aufgebracht sind, die die mechanische Festigkeit, Erosionsbeständigkeit, thermische oder elektrische Leitfähigkeit positiv beeinflussen.

6. Glimmschutzsystem nach Anspruch 4 oder 5,
**dadurch gekennzeichnet, dass** die Hohlkugeln (13) Gas (12) und/oder die aufkochende Flüssigkeit (12) enthalten, wobei beim Einwirken von Wärme, die Hülle (11) der Hohlkugeln (13) erweicht und das in den Hohlkugeln (13) enthaltene Gas (12) und/oder aufkochende Flüssigkeit (12) eine Expansion bewirkt.

7. Glimmschutzsystem nach einem der vorhergehenden Ansprüche,
**dadurch gekennzeichnet, dass** dem Lack (10) nanoskalige und/oder mikroskalige anorganische erosionshemmende Partikel zugesetzt sind.

8. Glimmschutzsystem nach einem der vorhergehenden Ansprüche,
**dadurch gekennzeichnet, dass** der Lack (10) elastisch oder semi-elastisch ist.

9. Glimmschutzsystem nach einem der vorhergehenden Ansprüche,
**dadurch gekennzeichnet, dass** eine Expansionstemperatur des thermoexpandierenden Füllstoffes über einer Angelier- und/oder Aushärtetemperatur des Lacks (10) liegt.

10. Glimmschutzsystem nach einem der vorhergehenden Ansprüche,
**dadurch gekennzeichnet, dass** der Lack (10) mit dem thermoexpandierenden Füllstoff vorgeliert ist.

11. Glimmschutzsystem nach einem der vorhergehenden Ansprüche,
**dadurch gekennzeichnet, dass** der Lack (10) mit dem thermoexpandierenden Füllstoff bei der Applikation unterschiedliche Vernetzungsgrade aufweist.

12. Glimmschutzsystem nach einem der vorhergehenden Ansprüche,
**dadurch gekennzeichnet, dass** das Glimmschutzsystem ein Außenglimmschutz (5) ist.

13. Glimmschutzsystem nach einem der Ansprüche 1 bis 11,
**dadurch gekennzeichnet, dass** das Glimmschutzsystem ein Endenglimmschutz (8) enthält.

14. Reparaturlack (14) zur Reparatur eines Umhüllkörpers für eine Hochspannungsmaschine, umfassend einen elektrisch leitfähigen Lack, wobei dem leitfähigen Lack (10) ein Füllstoff zugesetzt ist,
**dadurch gekennzeichnet, dass** der Füllstoff zumindest teilweise einen thermoexpandierenden Füllstoff umfasst.

15. Reparaturlack (14) zur Reparatur eines Umhüllkörpers für eine Hochspannungsmaschine nach Anspruch 14,
**dadurch gekennzeichnet, dass** der thermoexpandierender Füllstoff zumindest teilweise mikroskopische Hohlkugeln (13) umfasst, deren Hülle (11) aus Polymeren besteht.

16. Reparaturlack (14) zur Reparatur eines Umhüllkörpers nach Anspruch 15,
**dadurch gekennzeichnet, dass** auf die Hülle (11) verschiedene anorganische Beschichtungen an- oder aufgebracht sind, die die mechanische Festigkeit, Erosionsbeständigkeit, thermische oder elektrische Leitfähigkeit positiv beeinflussen.

17. Reparaturlack (14) zur Reparatur eines Umhüllkörpers nach einem der Ansprüche 14-16,
**dadurch gekennzeichnet, dass** dem Lack (10) nanoskalige und/oder mikroskalige anorganische erosionshemmende Partikel zugesetzt sind.

18. Reparaturlack (14) zur Reparatur eines Umhüllkörpers nach einem der Ansprüche 14-17,
**dadurch gekennzeichnet, dass** der Lack (10) elastisch oder semi-elastisch ist.

19. Reparaturlack (14) zur Reparatur eines Umhüllkörpers nach einem der Ansprüche 14-18,
**dadurch gekennzeichnet, dass** eine Expansionstemperatur des thermoexpandierenden Füllstoffes über einer Angelier- und/oder Aushärtetemperatur des Lacks (10) liegt.

20. Reparaturlack (14) zur Reparatur eines Umhüllkörpers nach einem der Ansprüche 14-19,
**dadurch gekennzeichnet, dass** der Lack (10) mit dem thermoexpandierenden Füllstoff vorgeliert ist.

21. Reparaturlack (14) zur Reparatur eines Umhüllkörpers nach einem der Ansprüche 14-20,
**dadurch gekennzeichnet, dass** der Lack (10) mit dem thermoexpandierenden Füllstoff bei der Applikation unterschiedliche Vernetzungsgerade aufweist.

22. Reparaturlack (14) nach einem der Ansprüche 14-21 zur Reparatur eines Umhüllkörpers nach einem der Ansprüche 1-13.

23. Verfahren zur Herstellung eines Glimmschutzsystems für eine Hochspannungsmaschine, umfassend einen leitfähigen Umhüllkörper für einen stromführenden Leiter der Hochspannungsmaschine, wobei der Umhüllkörper zumindest teilweise erodiert ist,
**gekennzeichnet durch** folgende Schritte:
- Bereitstellen eines leitfähigen Lacks (10), wobei dem leitfähigen Lack (10) ein thermoexpandierender Füllstoff zugesetzt wird,
- Auftragen des leitfähigen Lacks (10) mit dem zugesetzten thermoexpandierenden Füllstoff, zumindest auf die Erosionsstelle,
- Hineinfließen des leitfähigen Lacks (10) mit dem zugesetzten thermoexpandierenden Füllstoff zumindest teilweise in die Erosionsstelle,
- Vortrocken und/oder Vorgelieren des leitfähigen Lacks (10) mit dem zugesetzten thermoexpandierenden Füllstoff,
- Expansion des leitfähigen Lacks (10) mit dem zugesetzten thermoexpandierenden Füllstoff, wobei durch die Expansion die Erosionsstelle und insbesondere die schwer zugänglichen Bereiche davon im Wesentlichen vollständig ausgefüllt wird.

24. Verfahren zur Herstellung eines Glimmschutzsystems nach Anspruch 23,
**dadurch gekennzeichnet, dass** die Expansion durch Heizen mit Heißluft und/oder im Betrieb durch Betriebswärme, insbesondere durch Betriebswärme eines Generators, oder durch einen gesonderten Heizvorgang/Generatorwärmelauf erfolgen.

25. Verfahren zur Herstellung eines Glimmschutzsystems nach Anspruch 23 oder 24,
**dadurch gekennzeichnet, dass** der thermoexpandierende Füllstoff zumindest teilweise mikroskopische Hohlkugeln (13) umfasst, deren Hülle (11) aus Polymeren besteht, wobei die Expansion der Hohlkugeln (13) durch den Lack (10) oder Temperatur begrenzt werden.

26. Verfahren zur Herstellung eines Glimmschutzsystems nach Anspruch 23 - 25,
**dadurch gekennzeichnet, dass** durch eine Festlegung des Kugelschalenmaterials und des Füllstoffs der Grad der Expansion der Hohlkugeln (13) bei einer vorgegebenen Temperatur sowie die Reversibilität oder Einmaligkeit der Expansion eingestellt werden.

## Claims

1. Corona shielding system for a high-voltage machine comprising a covering for a current-carrying conductor of the high-voltage machine, wherein the covering has an electrically conductive lacquer (10), wherein a filler is added to the conductive lacquer (10),
**characterized in that**
the filler at least partially comprises a thermally expanding filler.

2. Corona shielding system for a high-voltage machine according to Claim 1,
**characterized in that**
the filler is electrically conductive.

3. Corona shielding system according to Claim 1 or 2,
**characterized in that**
the filler consists entirely of thermally expanding filler.

4. Corona shielding system according to one of the preceding claims,
**characterized in that**
the thermally expanding filler at least partially comprises microscopic hollow spheres (13) of which the envelope (11) consists of polymers.

5. Corona shielding system according to Claim 4,
**characterized in that**
various inorganic coatings, which have a positive effect on mechanical strength, erosion resistance, thermal or electrical conductivity, are applied to or deposited on the envelope (11).

6. Corona shielding system according to Claim 4 or 5,
**characterized in that**
the hollow spheres (13) contain gas (12) and/or boiling liquid (12), wherein, under the action of heat, the envelope (11) of the hollow spheres (13) softens and the gas (12) and/or boiling liquid (12) contained in the hollow spheres (13) causes an expansion.

7. Corona shielding system according to one of the preceding claims,
**characterized in that**
nanoscale and/or microscale inorganic erosion-inhibiting particles are added to the lacquer (10).

8. Corona shielding system according to one of the preceding claims,
**characterized in that**
the lacquer (10) is elastic or semi-elastic.

9. Corona shielding system according to one of the preceding claims,
**characterized in that**
an expansion temperature of the thermally expanding filler is above a gelation temperature and/or a curing temperature of the lacquer (10).

10. Corona shielding system according to one of the preceding claims,
**characterized in that**
the lacquer (10) with the thermally expanding filler is pre-gelled.

11. Corona shielding system according to one of the preceding claims,
**characterized in that**
the lacquer (10) with the thermally expanding filler has different degrees of crosslinking on application.

12. Corona shielding system according to one of the preceding claims,
**characterized in that**
the corona shielding system is an external corona shielding (5) .

13. Corona shielding system according to one of Claims 1 to 11,
**characterized in that**
the corona shielding system contains an overhang corona shielding (8).

14. Repair lacquer (14) for repairing a covering for a high-voltage machine, comprising an electrically conductive lacquer, wherein a filler is added to the conductive lacquer (10),
**characterized in that**
the filler at least partially comprises a thermally expanding filler.

15. Repair lacquer (14) for repairing a covering for a high-voltage machine according to Claim 14,
**characterized in that**
the thermally expanding filler at least partially comprises microscopic hollow spheres (13) of which the envelope (11) consists of polymers.

16. Repair lacquer (14) for repairing a covering according to Claim 15,
**characterized in that**
various inorganic coatings, which have a positive effect on mechanical strength, erosion resistance, thermal or electrical conductivity, are applied to or deposited on the envelope (11).

17. Repair lacquer (14) for repairing a covering according to one of Claims 14-16,
**characterized in that**
nanoscale and/or microscale inorganic erosion-inhibiting particles are added to the lacquer (10).

18. Repair lacquer (14) for repairing a covering according to one of Claims 14-17,
**characterized in that**
the lacquer (10) is elastic or semi-elastic.

19. Repair lacquer (14) for repairing a covering according to one of Claims 14-18,
**characterized in that**
an expansion temperature of the thermally expanding filler is above a gelation temperature and/or a curing temperature of the lacquer (10).

20. Repair lacquer (14) for repairing a covering according to one of Claims 14-19,
**characterized in that**
the lacquer (10) with the thermally expanding filler is pre-gelled.

21. Repair lacquer (14) for repairing a covering according to one of Claims 14-20,
**characterized in that**
the lacquer (10) with the thermally expanding filler has different degrees of crosslinking on application.

22. Repair lacquer (14) according to one of Claims 14-21 for repairing a covering according to one of Claims 1-13.

23. Method for producing a corona shielding system for a high-voltage machine, comprising a conductive covering for a current-carrying conductor of the high-voltage machine, wherein the covering is at least partially eroded,
**characterized by**
the following steps:
- providing a conductive lacquer (10), wherein a thermally expanding filler is added to the conductive lacquer (10),
- applying the conductive lacquer (10), with the added thermally expanding filler, at least to the erosion location,
- flowing in of the conductive lacquer (10), with the added thermally expanding filler, at least partially into the erosion location,
- pre-drying and/or pre-gelling of the conductive lacquer (10) with the added thermally expanding filler,
- expansion of the conductive lacquer (10), with the added thermally expanding filler, wherein as a consequence of the expansion the erosion location and in particular the hard-to-reach regions thereof are essentially completely filled.

24. Method for producing a corona shielding system according to Claim 23,
**characterized in that**
the expansion is effected by heating with hot air and/or in operation by operating heat, in particular by operating heat of a generator, or by a special heating procedure/generator heat cycle.

25. Method for producing a corona shielding system according to Claim 23 or 24,
**characterized in that**
the thermally expanding filler at least partially comprises microscopic hollow spheres (13) of which the envelope (11) consists of polymers, wherein the expansion of the hollow spheres (13) is limited by the lacquer (10) or temperature.

26. Method for producing a corona shielding system according to Claims 23-25,
**characterized in that**
the degree of expansion of the hollow spheres (13) at a given temperature, and the reversibility or one-off nature of the expansion are set by determining the sphere shell material and the filler.

## Revendications

1. Système anti-effluve pour une machine à haute tension, comprenant une gaine pour un conducteur, parcouru par le courant, de la machine à haute tension, la gaine ayant un vernis (10) conducteur de l'électricité, dans lequel une charge est ajoutée au vernis (10) conducteur,
**caractérisé en ce que**
la charge comprend, au moins en partie, une charge thermo-expansée.

2. Système anti-effluve pour une machine à haute tension suivant la revendication 1,
**caractérisé en ce que**
la charge est conductrice de l'électricité.

3. Système anti-effluve suivant la revendication 1 ou 3,
**caractérisé en ce que**
la charge est constituée entièrement d'une charge thermo-expansée.

4. Système anti-effluve suivant l'une des revendications précédentes,
**caractérisé en ce que**
la charge thermo-expansée comprend, au moins en partie, des billes (13) creuses microscopiques, dont l'enrobage (11) est en polymère.

5. Système anti-effluve suivant la revendication 4,
**caractérisé en ce que**,
sur l'enrobage (11), sont appliqués ou déposés divers revêtements minéraux, qui influent favorablement sur la résistance mécanique, la résistance à l'érosion, la conductibilité thermique ou la conductivité électrique.

6. Système anti-effluve suivant la revendication 4 ou 5,
**caractérisé en ce que**,
les billes (13) creuses contiennent du gaz (12) et/ou le liquide (12) mis à ébullition, dans lequel, sous l'action de la chaleur, l'enrobage (11) des billes (13) creuses se ramollit et le gaz (12) et/ou le liquide (12) mis à ébullition contenus dans les billes (13) creuse provoquent une expansion.

7. Système anti-effluve suivant l'une des revendications précédentes,
**caractérisé en ce que**
des particules minérales anti-érosion, à l'échelle nanométrique et/ou microscopique, sont ajoutées au vernis (10).

8. Système anti-effluve suivant l'une des revendications précédentes,
**caractérisé en ce que**
le vernis (10) est élastique ou semi-élastique.

9. Système anti-effluve suivant l'une des revendications précédentes,
**caractérisé en ce qu'**
une température d'expansion de la charge thermo-expansée est supérieure à une température de prise en charge et/ou de durcissement du vernis (10).

10. Système anti-effluve suivant l'une des revendications précédentes,
**caractérisé en ce que**
le vernis (10) avec la charge thermo-expansée est prégélifié.

11. Système anti-effluve suivant l'une des revendications précédentes,
**caractérisé en ce que**
le vernis (10) avec la charge thermo-expansée a, à l'application, des degrés de réticulation différents.

12. Système anti-effluve suivant l'une des revendications précédentes,
**caractérisé en ce que**
le système anti-effluve est un anti-effluve (5) extérieur.

13. Système anti-effluve suivant l'une des revendications 1 à 11,
**caractérisé en ce que**
le système anti-effluve contient un anti-effluve (8) d'extrémité.

14. Vernis (14) de réparation pour réparer une gaine pour une machine à haute tension, comprenant un vernis conducteur de l'électricité, une charge étant ajoutée au vernis (10) conducteur de l'électricité,
**caractérisé en ce que**
la charge comprend, au moins en partie, une charge thermo-expansée.

15. Vernis (14) de réparation pour réparer une gaine pour une machine à haute tension suivant la revendication 14,
**caractérisé en ce que**
la charge thermo-expansée comprend, au moins en partie, des billes (13) creuses microscopiques, dont l'enrobage (11) est en polymère.

16. Vernis (14) de réparation pour réparer une gaine suivant la revendication 15,
**caractérisé en ce que**,
sur l'enrobage (11), sont appliqués ou déposés divers revêtements minéraux, qui influent favorablement sur la résistance mécanique, la résistance à l'érosion, la conductibilité thermique ou la conductivité électrique.

17. Vernis (14) de réparation pour réparer une gaine suivant l'une des revendications 14 à 16,
**caractérisé en ce que**
des particules minérales anti-érosion, à l'échelle nanométrique et/ou microscopique, sont ajoutées au vernis (10).

18. Vernis (14) de réparation pour réparer une gaine suivant l'une des revendications 14 à 17,
**caractérisé en ce que**
le vernis (10) est élastique ou semi-élastique.

19. Vernis (14) de réparation pour réparer une gaine suivant l'une des revendications 14 à 18,
**caractérisé en ce que**
une température d'expansion de la charge thermo-expansée est supérieure à une température de prise en charge et/ou de durcissement du vernis (10).

20. Vernis (14) de réparation pour réparer une gaine suivant l'une des revendications 14 à 19,
**caractérisé en ce que**
le vernis (10) avec la charge thermo-expansée est prégélifié.

21. Vernis (14) de réparation pour réparer une gaine suivant l'une des revendications 14 à 20,
**caractérisé en ce que**
le vernis (10) avec la charge thermo-expansée a, à l'application, des degrés de réticulation différents.

22. Vernis (14) de réparation suivant l'une des revendications 14 à 21, pour réparer une gaine suivant l'une des revendications 1 à 13.

23. Procédé de production d'un système anti-effluve pour une machine à haute tension, comprenant une gaine conductrice pour un conducteur, parcouru par du courant, de la machine à haute tension, la gaine étant érodé, au moins en partie, **caractérisé par** les stades suivants :
- on se procure un vernis (10) conducteur, une charge thermo-expansée étant ajoutée au vernis (10) conducteur,
- dépôt du vernis (10) conducteur ayant la charge thermo-expansée ajoutée, au moins sur le point d'érosion,
- écoulement du vernis (10) conducteur ayant la charge thermo-expansée ajoutée, au moins en partie dans le point d'érosion,
- séchage préalable et/ou gélification préalable du vernis (10) conducteur ayant la charge thermo-expansée ajoutée,
- expansion du vernis (10) conducteur ayant la charge thermo-expansée ajoutée, dans lequel on remplit sensiblement complètement, par l'expansion, le point d'érosion, et notamment les parties qui en sont difficilement accessibles.

24. Procédé de production d'un système anti-effluve suivant la revendication 23,
**caractérisé en ce que**
l'expansion s'effectue par chauffage par de l'air chaud et/ou, en fonctionnement, par de la chaleur de fonctionnement, notamment par de la chaleur de fonctionnement d'une génératrice ou par une opération de chauffage distincte/un dégagement de chaleur de la génératrice.

25. Procédé de production d'un système anti-effluve suivant la revendication 23 ou 24,
**caractérisé en ce que**
la charge thermo-expansée comprend, au moins en partie, des billes (13) creuses microscopiques, dont l'enrobage (11) est en polymère, l'expansion des billes (13) creuses étant limitée par le vernis (10) ou par la température.

26. Procédé de production d'un système anti-effluve suivant la revendication 23 à 25,
**caractérisé en ce que**,
par une fixation du matériau d'enrobage des billes et de la charge, on règle le degré de l'expansion des billes (13) creuses à une température donnée à l'avance ainsi que la réversibilité ou le fait que l'expansion n'a lieu qu'une fois.
